(19) Europäisches Patentamt
European Patent Office
Office européen des brevets

(11) **EP 3 611 286 A1**

(12) **EUROPEAN PATENT APPLICATION**
published in accordance with Art. 153(4) EPC

(43) Date of publication:
**19.02.2020 Bulletin 2020/08**

(51) Int Cl.:
*C22C 38/00* (2006.01)   *C21D 1/06* (2006.01)
*C21D 7/06* (2006.01)   *C21D 9/02* (2006.01)
*C22C 38/46* (2006.01)   *F16F 1/06* (2006.01)
*C22C 38/54* (2006.01)

(21) Application number: **18784444.4**

(22) Date of filing: **10.04.2018**

(86) International application number:
**PCT/JP2018/015034**

(87) International publication number:
**WO 2018/190331 (18.10.2018 Gazette 2018/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.04.2017  JP 2017078113**

(71) Applicant: **NHK Spring Co., Ltd.**
**Yokohama-shi, Kanagawa 236-0004 (JP)**

(72) Inventors:
• **AKANUMA, Toshiyuki**
**Yokohama-shi**
**Kanagawa 236-0004 (JP)**

• **SHIRAISHI, Tohru**
**Yokohama-shi**
**Kanagawa 236-0004 (JP)**
• **IWAGAKI, Yohei**
**Yokohama-shi**
**Kanagawa 236-0004 (JP)**
• **TAKAHASHI, Keita**
**Yokohama-shi**
**Kanagawa 236-0004 (JP)**
• **HIRAI, Shun**
**Yokohama-shi**
**Kanagawa 236-0004 (JP)**

(74) Representative: **Weickmann & Weickmann**
**PartmbB**
**Postfach 860 820**
**81635 München (DE)**

(54) **HELICAL COMPRESSION SPRING AND METHOD FOR PRODUCING SAME**

(57)    A C-condensed layer is formed on the surface of a wire material at a uniform thickness and in a narrow range, and appropriate compression residual stress distribution is imparted to the wire material after it is formed, so that a compression coil spring of high durability and with sag resistance can be provided. The compression coil spring includes a steel wire material containing, hereinafter in weight%, 0.5 to 0.7 % of C, 1.2 to 3.0 % of Si, 0.3 to 1.2 % of Mn, 0.5 to 1.9 % of Cr and 0.05 to 0.5 % of V as necessary components, one or more kinds selected from not more than 1.5 % of Ni, not more than 1.5 % of Mo and not more than 0.5 % of W as freely selected components, and iron and inevitable impurities as the remainder; the C-condensed layer which exceeds the average concentration of C contained in the steel wire material exists at a surface layer part, and the thickness of the C-condensed layer is within 0.01 to 0.05 mm along the entire circumference of the steel wire material.

Fig. 2

**Description**

Technical Field

The present invention relates to a compression coil spring used in an engine or a clutch of a vehicle, for example, and in particular, relates to a compression coil spring having superior fatigue resistance and sag resistance even when used in a high stress environment, and relates to a method for manufacturing the same.

Background Art

Recently, in view of environmental problems, requirements for lower fuel consumption for vehicles have become progressively severe, and size and weight reduction of vehicle parts is more strongly demanded than before. With respect to requirements for size and weight reduction, for example, extensive research is being performed on high degrees of strengthening of materials and surface strengthening by surface treatment in the field of compression coil spring parts, such as a clutch torsion spring used in a clutch or a valve spring used in an engine, and as a result, fatigue resistance and sag resistance, which are important properties of coil springs, have been improved.

Generally, methods for production of coil springs are roughly classified as hot forming methods or cold forming methods. A hot forming method is employed for forming coil springs when cold forming is difficult due to low workability, such as a coil having large wire diameter d, and having small spring index D/d, which is the ratio of coil average diameter D and wire diameter d. As such coil spring materials, carbon steel and spring steel may be mentioned. In the hot forming method, wire material is heated to high temperature so it can be processed easily, wound around a core metal so as to perform coiling in a coil spring shape, quenched, tempered, and further processed by shotpeening or setting, so as to obtain fatigue resistance and sag resistance, which are important as properties of coil springs. It should be noted that in the hot forming process, coiling without using a core metal is not realized in practice because it is technically very difficult. Therefore, in a conventional technique, core metal is necessary in hot forming methods, and a coil spring which can be produced in this method has lower degree of freedom in shape compared to a coil produced by a cold forming method in which coiling can be performed without using a core metal.

On the other hand, with respect to compression coil springs in the valve spring or the clutch torsion spring class, the cold forming can be employed because they have relatively small wire diameter. In addition, high dimension accuracy is easily obtained since there is no transformation or thermal expansion and shrinkage by heating. In addition, since mass production property (takt time and cost) by processing rate and facility cost is superior, a compression coil spring in this class has been conventionally produced by a cold forming method. Furthermore, the cold forming method is employed mainly because forming technique without a core metal is established in this cold forming method, and degree of freedom of the shape of the coil spring is high. A production technique for a compression coil spring of a valve spring or a clutch torsion spring class by a hot forming method has not heretofore been available. It should be noted that a hard drawn wire such as carbon steel wire, hard steel wire, piano wire and spring steel wire has been conventionally used as a coil spring wire material in the cold forming method. However, recently, from the viewpoint of weight reduction, high degree of strengthening of materials is required, and an expensive oil tempered wire is coming into wide use.

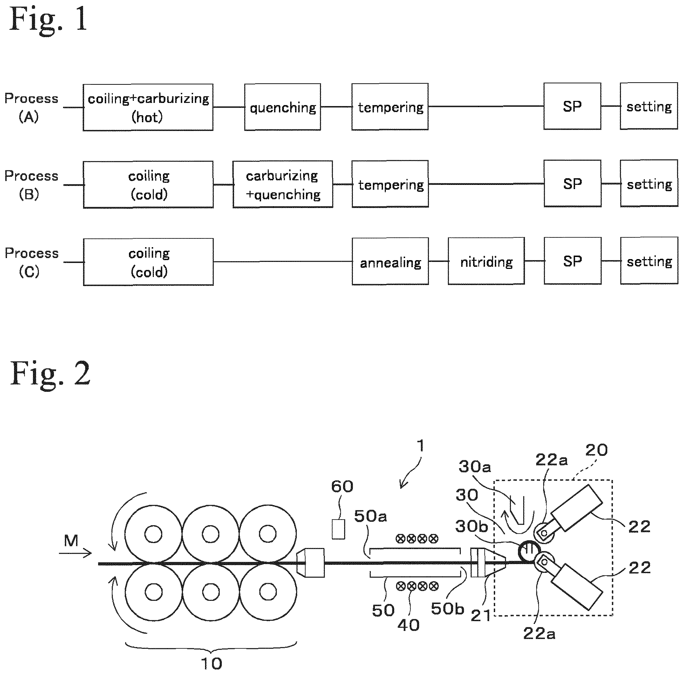

In the cold forming method, as shown in Process C of Fig. 1, wire material is coiled in a coil spring shape in cold conditions, is annealed, and is further processed by nitriding, shotpeening, and setting, if necessary. Here, annealing has a purpose of removing residual stress which is generated by processing and which is an obstruction to improving fatigue resistance of coil springs, and it may contribute to improving fatigue resistance of coil springs together with imparting compressive residual stress onto a surface by shotpeening. It should be noted that with respect to a coil spring used in heavy load stress such as a valve spring or a clutch torsion spring, surface hardening treatment by nitriding treatment is performed, if necessary, before shotpeening.

Extensive research is being performed to further improve fatigue resistance. For example, Patent Document 1 below discloses an oil tempered wire for cold forming, and a technique in which fatigue resistance is improved by using processing-induced transformation of residual austenite. Patent Document 2 below discloses a technique in which hydrocarbon gas is directly blown from a nozzle onto a surface of a steel wire material during a period from heating to quenching so that a C-condensed layer is formed on the surface of the steel wire material. Patent Document 3 below discloses a technique in which multi-step shotpeening at different projection rates is performed onto a surface of wire material on which nitriding treatment is performed so that large compressive residual stress is imparted and fatigue resistance is improved.

In Patent Document 1, residual stress may be generated in the coil spring after coiling. This residual stress, in particular tensile residual stress along wire axis direction generated on the surface of the coil inner diameter side, is an obstruction to the improvement of fatigue resistance as a coil spring. Ordinarily, annealing is performed so as to remove this residual stress by processing; however, it is easily estimated and is widely known to those skilled in the art that it is difficult to completely remove this residual stress while maintaining desired wire material strength, even if the wire material having high softening resistance disclosed in the Patent Document 1 is used. Therefore, even if shotpeening is performed thereafter, it is difficult to impart sufficient compressive residual stress onto a wire material surface due to influence of tensile residual stress by processing remaining in a coil inner diameter side, and sufficient fatigue resistance as a coil spring cannot be obtained.

Furthermore, Patent Document 2 discloses that during the performance of coiling in a condition in which the steel wire material is heated to an austenite region, carburizing treatment of the steel wire material is also performed at the same time so that occurrence of residual stress due to processing is solved and the C-condensed layer is formed on the surface, and therefore, effects of shotpeening and setting, which will be performed subsequently, can be efficiently obtained. In this case, hydrocarbon gas is directly blown from a nozzle onto the surface of the steel wire material during a period from heating to quenching so that a C-condensed layer is formed on the surface of the steel wire material. However, in this method, it is easily assumed that thicknesses of the C-condensed layer and surface C concentration would be uneven along a circumferential direction of the wire material. This uneven variation means that a portion having excessively large C-condensed layer thickness and C concentration or having excessively small C-condensed layer thickness and C concentration compared to desirable C-condensed layer thickness and C concentration, is formed. At the portion at which C concentration is high, transformation from austenite to martensite is inhibited and residual austenite phase may increase. As a result, although fatigue resistance is assumed to be improved, decrease of sag resistance cannot be avoided. The amount of compressive residual stress in the vicinity of the surface that is introduced by shotpeening is proportional to yield stress in the vicinity of the surface of a steel wire material where it is affected by the shotpeening, that is, C concentration. Therefore, in a low concentration C-condensed layer, the compressive residual stress in the vicinity of the surface which is introduced by shotpeening may not reach a desirable degree, and effects of prevention of generation of fatigue cracking which originate from the vicinity of the surface (including the outermost surface) is not sufficient. Furthermore, since surface hardness is increased slightly, abrasion at an intermediate part of the wire at which there is repeated contact during action cannot be prevented, and early breakage originating from the abraded part may occur. Based on these reasons, improvement of fatigue resistance is not realized if a low concentration C-condensed layer exists.

On the other hand, a vacuum carburization treatment based on a batch process has been performed conventionally. A carburized spring which is treated by this process can obtain deep and high levels of compressive residual stress, and thus, durability can be improved; however, it is difficult to control the amount of carburization based on the structure of the apparatus system, and the obtained carburized depth may be deeper than the desirable depth. In particular, there may be excess carburization for a valve spring, and sag resistance may be greatly decreased according to increase of residual austenite phase formed by an excess C-condensed layer thickness.

Furthermore, in Patent Document 3, compressive residual stress in the vicinity of the wire material surface (hereinafter referred to as "surface") of the coil spring is about 1400 MPa, the compressive residual stress is sufficient for reducing cracking at the surface as a coil spring which is used under heavy load stress in the class of a valve spring or a clutch torsion spring. However, as a result of improving compressive residual stress at the surface, compressive residual stress inside of the wire material is decreased, and the effect of the compressive residual stress against the generation of cracking which starts from inclusions or the like inside of wire material, is poor. That is, since there is a limitation in energy imparted by shotpeening in the method of the Patent Document 3, it is difficult to greatly increase the total sum of compressive residual stress, although distribution of compressive residual stress can be changed to some extent. It is not thought to be possible to solve effects by the abovementioned residual stress by processing; therefore, effects for improving fatigue resistance for a wire material having the same strength is poor.

It should be noted that kinds of means for improving surface compressive residual stress are practically realized, and as a result, in a coil spring having a wire diameter of about 1.5 to 10 mm, for example, the maximal value of synthesis stress which is a sum of action stress by outer load and residual stress exists in a range of 0.1 to 0.4 mm of depth from the wire material surface, and the part having the largest combined stress corresponds to an origin of breakage. Therefore, it is important for the fatigue resistance to maintain large compressive residual stress in a depth range of 0.1 to 0.4 mm.

The patent documents are as follows:

Patent Document 1: Japanese Patent No. 3595901
Patent Document 2: Japanese Unexamined Patent Application Publication No. 2014-055343
Patent Document 3: Japanese Unexamined Patent Application Publication No. 2009-226523

Summary of the Invention

As mentioned above, conventional methods for production and the techniques disclosed in the above Patent documents do not satisfy the recent requirements for both further improvement in fatigue resistance and sag resistance under high stress and cost reduction. Furthermore, since residual stress by processing is not completely solved by an annealing treatment after forming, performance of the wire material is not sufficiently utilized.

In view of the above circumstances, an object of the present invention is to provide a compression coil spring having high durability and high sag resistance, in which, by solving tensile residual stress due to coiling processing and by forming a C-condensed layer at the surface of wire material uniformly at an appropriate C concentration and at an appropriate thickness range so as to impart appropriate compressive residual stress distribution on the wire material after forming, and a method for production thereof.

The inventors have researched fatigue resistance and sag resistance in coil springs. They found that by forming a thin carburized layer (hereinafter referred to as "C-condensed layer") having uniform thickness on the surface of steel wire material, not only can the residual austenite phase be reduced and sag resistance be improved, but also yield stress is improved by hardening the vicinity of the surface so as to efficiently obtain an effect of shotpeening performed subsequently, and thus, fatigue resistance can be improved.

That is, the compression coil spring of the present invention uses a steel wire material containing (hereinafter in weight%) 0.5 to 0.7 % of C, 1.2 to 3.0 % of Si, 0.3 to 1.2 % of Mn, 0.5 to 1.9 % of Cr and 0.05 to 0.5 % of V as necessary components, one or more kinds selected from not more than 1.5 % of Ni, not more than 1.5 % of Mo and not more than 0.5 % of W as freely selected components, and iron and inevitable impurities as the remainder, C-condensed layer which exceeds average concentration of C contained in the steel wire material exists at a surface layer part, and thickness of the C-condensed layer is within 0.01 to 0.05 mm along the entire circumference of the steel wire material.

Hereinafter, reasons for limitations in the value ranges defined in the present invention are explained. First, reasons for limitation of the chemical components of the steel wire material used in the present invention are explained. In the present invention, the steel wire material containing, hereinafter in weight%, 0.5 to 0.7 % of C, 1.2 to 3.0 % of Si, 0.3 to 1.2 % of Mn, 0.5 to 1.9 % of Cr and 0.05 to 0.5 % of V as necessary components, one or more kinds selected from not more than 1.5 % of Ni, not more than 1.5 % of Mo and not more than 0.5 % of W as freely selected components, and iron and inevitable impurities as the remainder, is used. Hereinafter, "%" means "weight%".

(1) Material components

C: 0.5 to 0.7 %

C contributes to improvement in strength. In a case in which content of C is less than 0.5 %, since strength is not improved sufficiently, fatigue resistance and sag resistance may be insufficient. On the other hand, in a case in which content of C is more than 0.7 %, toughness may be decreased and cracking may easily occur. Therefore, the content of C is 0.5 to 0.7 %.

Si: 1.2 to 3.0%

Si is effective for deoxidizing steel, and furthermore, contributes to improvement in strength and tempering softening resistance. In a case in which content of Si is less than 1.2 %, these effects cannot be sufficiently obtained. On the other hand, in a case in which content of Si is greater than 3.0 %, decarburizing may be promoted and surface strength of wire material may be deteriorated and since toughness may be greatly decreased, cracking may occur during usage as a coil spring. Therefore, the content of Si is 1.2 to 3.0 %. On the other hand, although the above effects on the performance of the coil spring are the same within 2.4 % to 3.0 % of the content of Si, since increase in content of Si within this range may increase risk of the occurrence of cracking during casting in material alloy production, it is desirable that the content of Si be not more than 2.4 %.

Mn: 0.3 to 1.2 %

Mn contributes to improvement in quenching properties. In a case in which the content of Mn is less than 0.3 %, it may be difficult to maintain sufficient quenching properties, and the effect of fixation of S (generation of MnS), which is counter to ductility and toughness, may be decreased. On the other hand, in a case in which content of Mn is greater than 1.2 %, ductility may be decreased, and cracking and surface damage may easily occur. Therefore, the content of Mn is 0.3 to 1.2 %. On the other hand, although the above effects on performance of coil springs are the same within 0.8 % to 1.2 % of the content of Mn, since increase of the content of Mn within this range may increase risk of breakage occurring during wire drawing processing in material alloy production, it is desirable that content of Mn be not more than 0.8 %.

Cr: 0.5 to 1.9 %

Cr prevents decarburization effectively and contributes to improvement in strength, tempering softening resistance, and fatigue resistance. Furthermore, it is also effective for improvement in sag resistance in hot conditions. Therefore, it is desirable that Cr be further added at 0.5 to 1.9 % in the present invention. In a case in which content of Cr is less than 0.5 %, these effects cannot be sufficiently obtained. On the other hand, in a case in which the content of Cr is more than 1.9 %, toughness may be decreased, and cracking and surface damage may easily occur.

V: 0.05 to 0.5 %

V is not only effective for improvement in fatigue resistance but also sag resistance since V is deposited as fine carbide by heat treatment, crystal grains are smaller, and strength is improved without losing toughness. Furthermore, V contributes to improvement in tempering softening resistance. In a case in which content of V is less than 0.05 %, such effect cannot be obtained. On the other hand, in a case in which content of V is more than 0.5 %, large amounts of carbide may be formed during heating, thereby deteriorating toughness.

In the present invention, one or more kinds selected from Ni, Mo and W can be added as freely selected components. As a result, a coil spring having better performance and a coil spring more appropriate for a specialized use can be produced.

Ni: Not more than 1.5 %

Ni is effective for improvement in fatigue resistance since Ni contributes to improvement in toughness. Furthermore, Ni also contributes to improvement in corrosion resistance. On the other hand, in a case in which the content of Ni is greater than 1.5 %, toughness is undesirably decreased.

Mo: Not more than 1.5 %

Mo contributes to improvement in quenching property and toughness. Mo can be added instead of Mn, which contributes to improvement in quenching property, and alternatively, Mn and Mo can be added together. Mo can be added instead of Ni, which contributes to improvement in toughness, and alternatively, Ni and Mo can be added together. On the other hand, in a case in which content of Mo is more than 1.5 %, large amounts of carbide may be formed during heating, thereby deteriorating toughness.

W: Not more than 0.5 %

W is effective for improvement in fatigue resistance since W is deposited as fine carbide by heat treatment, crystal grains are smaller and strength is improved without losing toughness. Furthermore, W not only contributes to improvement in sag resistance, but also to tempering softening resistance. On the other hand, in a case in which the content of W is more than 0.5 %, large amounts of carbide may be formed during heating, thereby deteriorating toughness.

It should be noted that the following elements can be added, in addition to the freely selected elements Ni, Mo and W mentioned above, in the present invention.

B: 0.0003 to 0.003 %

B has an effect of improving quenching property and preventing low-temperature brittleness. Furthermore, B also contributes to improvement in sag resistance. B can be added instead of Mn, which contributes to improvement in quenching property, and alternatively, Mn and B can be added together. Such effects are poor in a case in which the content of B is less than 0.0003 %, and such effects are saturated, and production property and impact strength may be deteriorated in a case in which content is more than 0.003 %.

Cu: More than 0 % and not more than 0.65 %

Cu is effective for improvement in corrosion resistance since it is a metallic element having electrochemically higher ionization tendency than that of Fe, and it has an effect of increasing corrosion resistance in steel. Cu can be added instead of Ni, which contributes to improvement in corrosion resistance, and alternatively, Cu and Ni can be added together. In a case in which the content of Cu is greater than 0.65 %, cracking may easily occur during hot processing.

Ti, Nb: 0.05 to 0.5 %

Ti and Nb are elements which have effects similar to that of V. Such effects are poor in a case in which the content of these elements is less than 0.05 %, and large amounts of carbide may be formed during heating, thereby deteriorating toughness in a case in which the content is greater than 0.5 %.

(2) C concentration distribution

In order to improve yield stress by increasing hardness on the surface of wire material, the C-condensed layer is formed on the surface part of the wire material by carburizing treatment in the present invention. By improving yield stress, large surface compressive residual stress can be imparted by shotpeening performed thereafter. Furthermore, surface roughness of the wire material can be improved. Therefore, fatigue resistance can be further improved. In the C-condensed layer, C at a concentration greater than the average concentration of C in the wire material is contained. Furthermore, in order to obtain these effects sufficiently, it is desirable that maximum C concentration in the C-condensed layer be 0.7 to 1.2 %, and that depth of the C-condensed layer formed (depth of carburizing) be 0.01 to 0.05 mm from the surface of the wire material along the entirety of the circumference of the steel wire material.

In a case in which the maximum C concentration of the C-condensed layer is greater than 1.2 % or thickness of the C-condensed layer is greater than 0.05 mm, since the treatment must be performed at a high temperature in order for an efficient carburizing reaction to occur, crystal particle size may be deteriorated and fatigue resistance may be deteriorated. In addition, in the case in which the C concentration is greater than 1.2 %, C which cannot be solid-solved in the parent phase, may be deposited as carbides at crystal interfaces, thereby deteriorating toughness. Also in this case, fatigue resistance may be easily decreased. Furthermore, in a case in which the thickness of the C-condensed layer is greater than 0.05 mm, the ratio of residual austenite is increased, thereby deteriorating sag resistance.

On the other hand, in a case in which the maximum C concentration of the C-condensed layer is less than 0.7 % or thickness of the C-condensed layer from the wire material surface is less than 0.01 mm, the following adverse effects may occur. That is, the amount of compressive residual stress in the vicinity of a surface formed by shotpeening is proportional to yield stress in the vicinity of the surface affected by shotpeening in the steel wire material, that is, C concentration. Therefore, in a C-condensed layer having low concentration and depth, compressive residual stress in the vicinity of a surface formed by shotpeening would not reach a desirable level, and its effect of preventing generation of fatigue cracking originating from the vicinity of the surface (including the outermost surface) is not sufficient. In addition, since surface hardness is increased slightly, abrasion at an intermediate part of a wire at which contact is repeated during action cannot be prevented, and early breakage originating from the abraded part may occur. Based on these reasons, improvement of fatigue resistance is not realized if a low concentration C-condensed layer exists.

(3) Hardness distribution

It is desirable that internal hardness in a freely selected cross section of wire material be 600 to 710 HV, and that the maximum hardness in the C-condensed layer be 30 HV or more greater than the internal hardness. This is because the C-condensed layer at the surface of wire material having higher hardness than internal hardness may result in obtaining further higher compressive residual stress in the vicinity of the surface, and generation of fatigue cracking which starts from the vicinity of the surface (including the outermost surface) can be prevented. In a case in which the value is less than 30 HV, these effects cannot be sufficiently obtained.

(4) Crystal grain diameter

It is desirable that average crystal grain diameter (interface having direction angle difference of not less than 5° is defined as a grain boundary) which is measured by SEM/EBSD (electron backscatter diffraction) method be not more than 1.3 $\mu$m. In a case in which the average crystal grain diameter is greater than 1.3 $\mu$m, it is difficult to obtain sufficient fatigue resistance. On the other hand, a smaller average crystal grain diameter, that is, a finer block or lath in the prior austenite grain, is appropriate for improvement in fatigue resistance since resistance against cracking promoting is high.

(5) Residual stress distribution

The inventors examined fracture mechanics calculations, actual durability test and the like in relation to action stress necessary for a valve spring or clutch torsion spring and various factors which can be an origin of fatigue breakage (such as ductility and toughness, non-metallic inclusions, an abnormal structure such as a defective quenching structure, surface roughness, surface damage, or the like), and reached the following conclusion with respect to compressive residual stress necessary for the vicinity of a wire material surface of a coil spring. It should be noted that the compressive residual stress in the present invention should be in the approximate maximum principal stress direction in a case in which compressive load is loaded on a spring, that is, in a direction of +45° to the axial direction of the wire material.

That is, in the present invention, a depth from a surface of the wire material at which the value of unloaded compressive residual stress is zero in a maximum principal stress direction of an inner diameter side of a coil spring generated when a compressive load is loaded on the coil spring, is defined as a crossing point. The value of the integral from the surface to the crossing point in a residual stress distribution curve having the residual stress on the vertical axis and the depth from the surface on the horizontal axis, is defined as $L_{-\sigma R}$. Then, it is desirable that the $L_{-\sigma R}$ be not less than 150 MPa·mm. If it is lower than this value, it is not sufficient to restrain fatigue breakage originating from the inside.

It is desirable that the compressive residual stress distribution in the present invention be formed by shotpeening treatment and setting treatment. In a case in which multi-shotpeening is performed as the shotpeening treatment, it is desirable that sphere equivalent diameter of a shot used in a later shotpeening step be smaller than that of a shot used in an earlier shotpeening step. In practice, it is desirable that the multi-shotpeening treatment include a first shotpeening treatment using shot having particle diameters of 0.6 to 1.2 mm, a second shotpeening treatment using shot having particle diameters of 0.2 to 0.8 mm, and a third shotpeening treatment using shot having particle diameters of 0.02 to 0.30 mm. In this way, surface roughness increased by an earlier shotpeening can be reduced by a later shotpeening.

It should be noted that the shot diameter and the number of steps in the shotpeening treatment are not particularly limited to the above range, and necessary residual stress distribution, surface roughness or the like is imparted depending on required performance. Therefore, the shot diameter, material, the number of steps and the like are appropriately selected. Furthermore, since the compressive residual stress distribution that is introduced is also varied depending on shot rate or shot time, and these are also appropriately set depending on requirements.

(6) Residual austenite distribution

With respect to residual austenite volume ratio yR measured by using X-ray diffractometry, in a residual austenite distribution curve having the residual austenite volume ratio on the vertical axis and the depth from the surface on the horizontal axis, and when an integrated value from the surface to depth of 0.5 mm is defined as $I_{\gamma R}$, it is desirable that $I_{\gamma R}$ be not more than 3.4%·mm. In this way, by limiting residual austenite, sag resistance can be improved.

(7) Surface roughness

As a valve spring or clutch torsion spring used under heavy load stress, in order to satisfy a required fatigue resistance, surface roughness is also important in addition to the above-mentioned compressive residual stress distribution. As a result of fracture mechanics calculation and experiments for testing thereof by the inventors, it was obvious that effects of generating and promoting of cracking by surface origin can be rendered harmless by setting depth of surface damage (that is, surface roughness Rz (maximum height)) to be not more than 20 $\mu$m. Therefore, it is desirable that the surface roughness Rz be not more than 20 $\mu$m. In a case in which Rz is more than 20 $\mu$m, a concave part of the surface may become a stress concentration part, and cracking originating from the concave part may be easily generated and promoted, thereby resulting in early breakage.

(8) Coil spring shape

The present invention is desirable for a compression coil spring in which the degree of processing in coiling is large, and high fatigue resistance is required, having the following specifications. The present invention can be employed in a generally cold-formed compression coil spring in which circle equivalent diameter (diameter of a circle in a case in which a cross sectional area of a wire is converted into a circle having a cross sectional area the same as the cross sectional area, and including a non-circular shape cross section such as a polygonal shape or an egg shape) of wire material is in a range of 1.5 to 10 mm, and a spring index is in a range of 3 to 20.

In particular, the invention is desirable for a compression coil spring in which degree of processing in coiling is large (that is, in cold forming, tensile residual stress at an inner diameter side of coil generated by coiling processing is large), and a circle equivalent diameter which is for use for a valve spring or a clutch torsion spring requiring high fatigue resistance is in a range of 1.5 to 9.0 mm and a spring index is in a range of 3 to 8.

Furthermore, since the compression coil spring of the present invention is produced by the following coil spring forming apparatus that is different from a conventional hot forming method, a core metal is not necessary in coiling processing. Therefore, the degree of freedom of possible spring shape is high. That is, as a coil spring shape formed in the present invention, in addition to a typical cylindrical shape in which a coil outer diameter is almost the same along the spring as a whole, other irregular shapes such as a conical shape, a bell shape, a drum shape, a barrel shape and the like can be formed.

Here, the "cylindrical shape" is a spring having the same coil diameter, and the "conical shape" is a spring in which the coil diameter varies conically from one end to the other end. The "bell shape" is a spring in which coil diameter is small at one end, the diameter increases toward the center, and the diameter is the same toward the other end. It is also called "one-end narrow shape". The "drum shape" is a spring in which a coil diameter is large at both ends and the diameter is smaller at the center. The "barrel shape" is a spring in which a coil diameter is small at both ends and the diameter is larger at the center. It is also called "both-ends narrow shape".

Hereinafter, the method for production of a compression coil spring of the present invention is explained. The method for production of a compression coil spring of the present invention includes a coiling process in which steel wire material is hot-formed by a coil spring forming apparatus, a quenching process in which the coil which is coiled and cut off and is still at an austenite temperature range is quenched as it is, a tempering process in which a quenched coil is thermally refined, and a shotpeening process in which compressive residual stress is imparted to the wire material surface. In the coiling process, heating, carburizing, and hot-processing are performed. The coil spring forming apparatus includes a feed roller continuously supplying steel wire material, a coiling part coiling the steel wire material in a coil shape, and a cutting means for cutting the steel wire material which is continuously supplied from upstream after the steel wire material is coiled at a predetermined number of windings. The coiling part includes a wire guide for introducing the steel wire material supplied by the feed roller to an appropriate position in a processing part, a coiling tool including a coiling pin or coiling roller for processing the steel wire material supplied via the wire guide into a coil shape, and a pitch tool for imparting pitch. The coil spring forming apparatus further includes a heating means in which the steel wire material is heated to an austenite temperature region within 2.5 seconds in a region between exit of the feed roller and the coiling tool. Furthermore, along a part of or along the entire region from the steel wire material inlet side to the coiling tool in the heating means, a covering member which covers the outer circumference of the steel wire material is arranged, and a gas supplying means, which supplies hydrocarbon gas in the covering member, is arranged.

It is desirable that the heating means be high-frequency heating, and that a high-frequency heating coil be arranged so as to be coaxial with the steel wire material on a route of passing of the steel wire material in the wire guide, or on a route of passing of the steel wire material in a space between an end of steel wire material exit side of the wire guide and the coiling tool. It should be noted that other heating means such as energizing heating or laser heating, can be employed other than the high-frequency heating, as long as the temperature of the steel wire material can be increased up to an austenite region in a short time.

In the method for production of the compression coil spring of the present invention, it is desirable that surface temperature of the steel wire material when contacting the hydrocarbon gas be 850 to 1150 °C. According to this carburizing condition, carburizing can be efficiently performed in a short time while preventing significant enlargement of crystal grains of the wire material. Furthermore, in the method for production of the compression coil spring of the present invention, it is desirable that the main component of the hydrocarbon gas be methane, butane, propane, or acetylene.

In the above method for production, the tempering process is performed so that the coil spring which is hardened by the quenching process is thermally refined into a coil spring having appropriate hardness and toughness. Therefore, in a case in which required hardness and toughness are obtained in a quenching process, the tempering process can be omitted. In addition, multi-step shotpeening can be performed in the shotpeening process, and furthermore, if necessary, a low temperature aging treatment can be combined for the purpose of recovery of the surface elastic limit. Here, the low temperature aging treatment can be performed after the shotpeening process, or between each of the steps in the multi-step shotpeening. In a case in which shotpeening is performed using shot having particle diameters of 0.02 to 0.30 mm as the last step of the multi-step shotpeening, it is desirable that the low temperature aging treatment be performed as a pretreatment thereof, from the viewpoint of further increasing compressive residual stress of the outermost surface. It should be noted that setting process is a treatment improving sag resistance by increasing yield stress of steel wire material. Various methods such as cold setting, hot setting or the like can be mentioned as a setting that is performed on a coil spring, it is appropriately selected depending on required properties.

According to the method for production of a compression coil spring of the present invention, since a covering member which covers an outer circumference of the steel wire material and which has a cylindrical shape, for example, is arranged along a part of or along the entirety of the region from the steel wire material inlet side to the coiling tool in the heating means and hydrocarbon gas is supplied in the covering member, concentration of the hydrocarbon gas in the covering member can be easily controlled by controlling the supplied amount of the hydrocarbon gas. In addition, since the hydrocarbon gas surrounds steel wire material uniformly, the thickness of the C-condensed layer formed by carburizing can be uniform. That is, the C-condensed layer having a thickness of 0.01 to 0.05 mm can be formed along the entire circumference of the steel wire material.

According to the present invention, since hot coiling is performed by the abovementioned coil spring forming apparatus, residual stress by processing can be prevented from being generated. In addition, since the temperature of the steel wire material is increased up to an austenite region within 2.5 seconds, crystal grains can be prevented from coarsening, and superior fatigue resistance can be obtained. In addition, since the carburizing treatment is performed, the surface of the steel wire material can be rendered to have a high hardness, and compressive residual stress can be effectively imparted by shotpeening performed thereafter. In particular, in the method for production of the compression coil spring of the present invention, since the carburizing treatment is performed using heat generated during the hot coiling, the carburizing treatment can be efficiently performed.

The present invention can be applied to carbon steel wire, hard steel wire, piano wire, spring steel wire, carbon steel oil tempered wire, chromium vanadium steel oil tempered wire, silicon chromium steel oil tempered wire, silicon chromium vanadium steel oil tempered wire and the like which are used for springs. Here, since carbon steel wire, hard steel wire, piano wire, and spring steel wire are not processed by a heat treatment, unlike the oil tempered wire, they are less expensive compared to oil tempered wire having similar compositions as a steel wire material. Furthermore, since the heat treatment (quenching and tempering) is performed in the method for production in the present invention, a compression coil spring having similar properties can be produced both in a case in which carbon steel wire, hard steel wire, piano wire and spring steel wire are used, and in a case in which oil tempered wire is used, as long as they have similar compositions. Therefore, if the compositions are similar, the case in which carbon steel wire, hard steel wire, piano wire and spring wire are used is less expensive in the production.

Effects of the Invention

According to the present invention, since the thin and uniform C-condensed layer is formed on the surface of steel wire material, the total amount of residual austenite phase can be reduced and sag resistance can be improved. In addition, fatigue resistance can be improved by efficiently obtaining effects of shotpeening by improving yield stress by rendering the vicinity of the surface to have high hardness.

Brief Description of Drawings

Fig. 1 is a diagram showing an example of a method for production of a coil spring.
Fig. 2 is a conceptual diagram showing a forming part in the coiling apparatus in the Embodiment of the present invention.
Fig. 3 is a graph showing the residual stress distribution of the coil spring used in the Example.
Fig. 4 is a graph showing the residual austenite distribution of the coil spring used in the Example.

Explanation of Reference Symbols

1: Coiling apparatus forming part, 10: feed roller, 20: coiling part, 21: wire guide, 22: coiling tool, 22a: coiling pin, 30: cutting means, 30a: cutting blade, 30b: inner mold, 40: high frequency heating coil, 50: covering member, 50a: steel wire material inlet of covering member, 50b: steel wire material outlet of covering member, 60: gas supplying part (gas supplying means), M: steel wire material.

Best Mode for Carrying Out the Invention

Hereinafter, Embodiments of the present invention are explained in detail. Fig. 1 shows each of the processes for production. Process (A) is the process for production of the compression coil spring of the present invention, and the other processes are conventional examples. The process for production shown in Process (A) is a hot forming method by the following coiling apparatus, and the processes for production shown in Processes (B) and (C) are cold forming methods by a freely selected coiling apparatus.

Fig. 2 shows a conceptual diagram of the forming part 1 of the coiling apparatus used in the processes for production (A) shown in Fig. 1. As shown in Fig. 2, the coiling apparatus forming part 1 includes a feed roller 10 continuously supplying the steel wire material M, and a coiling part 20 coiling the steel wire material M in a coil shape. The coiling part 20 includes a wire guide 21 for introducing the steel wire material M supplied by the feed roller 10 to an appropriate position, the coiling tool 22 having a coiling pin (or a coiling roller) 22a for processing the steel wire material M supplied via the wire guide 21 into a coil shape, and a pitch tool (not shown) for imparting pitch. Furthermore, the coiling apparatus forming part 1 includes a cutting means 30 having a cutting blade 30a for cutting the steel wire material M which is continuously supplied from upstream after the steel wire material M is coiled at a predetermined number of windings and an inner mold 30b, and a high-frequency heating coil 40 heating the steel wire material M between outlet of the feed roller 10 and a coiling tool 22.

A covering member 50 consisting of ceramic, for example, is arranged inside the high-frequency heating coil 40. The covering member 50 includes a steel wire material inlet 50a and a steel wire material outlet 50b of smaller diameter at both ends thereof. A gas supplying part (gas supplying means) 60 supplying hydrocarbon gas to the covering member 50 is arranged in a vicinity of the steel wire material inlet 50a of the covering member 50. The gas supplying part 60 supplies hydrocarbon gas from the steel wire material inlet 50a, for example, of the covering member 50, to the inside. It should be noted that hydrocarbon gas may be supplied from the steel wire material outlet 50b.

Rapid heating in the coiling apparatus forming part 1 is performed by the high-frequency heating coil 40, and the steel wire material is heated up to an austenite temperature region within 2.5 seconds. The location of arrangement of the high-frequency heating coil 40 is shown in Fig. 2. The high-frequency heating coil 40 is arranged at an outer circumference of the covering member 50. The steel wire material M passing through the inside of the covering member 50 is heated by the high-frequency heating coil 40, and is carburized by hydrocarbon gas filled in the covering member 50. The gas supplying part supplies hydrocarbon gas into the covering member 50 in an amount considering the density and the flow rate of hydrocarbon gas in the covering member 50, which contributes to carburizing property.

The high-frequency heating coil 40 is arranged in the vicinity of the wire guide 21, and the coiling part 20 is arranged in order to form immediately after heating the steel wire material M. In the coiling part 20, the steel wire material M, which goes through the wire guide 21, is contacted to the coiling pin 22a and is bent at a predetermined curvature, and furthermore, is contacted to a coiling pin 22a downstream and is bent at a predetermined curvature. Furthermore, the steel wire material M contacts the pitch tool so as to impart a pitch to obtain required coil shape. When the wire material is wound at a predetermined number of windings, the wire material is cut by shearing between the inner mold 30b and a linear part by the cutting blade 30a of the cutting means 30, so that the steel wire material M which is supplied from upstream and the steel wire material M which is formed in the spring shape are cut off.

(1) Production process (A)

The process (A) in Fig. 1 shows the process for production of the first Embodiment. First, a steel wire material M containing, hereinafter in weight%, 0.5 to 0.7 % of C, 1.2 to 3.0 % of Si, 0.3 to 1.2 % of Mn, 0.5 to 1.9 % of Cr and 0.05 to 0.5 % of V as necessary components, one or more kinds selected from not more than 1.5 % of Ni, not more than 1.5 % of Mo and not more than 0.5 % of W as freely selected components, and iron and inevitable impurities as the remainder, and having a circle equivalent diameter of 1.5 mm to 10 mm is prepared. This steel wire material M is supplied by a wire supplying apparatus (not shown) to the feed roller 10, is heated to an austenite region within 2.5 seconds by the high-frequency heating coil 40, and is then coiled in the coiling part 20 (coiling process).

In this process, carburization treatment of the steel wire material M in the covering member 50 is performed simultaneously. Carburizing is performed at the wire material temperature of 850 to 1150 °C, so that the C-condensed layer having a maximum concentration of C of 0.7 to 1.2 % and thickness of 0.01 to 0.05 mm is formed on the surface of the steel wire material M. In this way, a surface part can be obtained in which hardness is not less than 30 HV higher than that of the internal hardness of the wire material.

Next, the coil, which is cut off after coiling and still has a temperature in an austenite region, is quenched as it is in a quenching vessel (not shown) (quenching process, performed in a quenching liquid of oil at about 60 °C, for example). Furthermore, tempering is performed (tempering process, performed at 150 to 500 °C, for example). By quenching, a high hardness structure including martensite structure can be obtained, and furthermore, by tempering, a tempered martensite structure having superior toughness can be obtained. Here, as the quenching and tempering treatments, a typical method can be employed. Heating temperature of the wire material before quenching, kind and temperature of the quenching liquid, and temperature and time of tempering are appropriately set depending on material of the steel wire material M.

Furthermore, by performing shotpeening treatment on the steel wire material M (shotpeening process) and setting treatment (setting process), a required fatigue resistance can be obtained. Since coiling is performed in conditions heated to an austenite region, generation of residual stress by processing can be prevented. Therefore, compressive residual stress can be more easily imparted by shotpeening compared to a cold forming method in which tensile residual stress is generated at a surface of the inner diameter side of a coil by processing, and compressive residual stress which is deep from the surface and large can be effectively imparted at the inner diameter side of the spring at which large stress are applied. Furthermore, by performing setting treatment, a further deeper compressive residual stress distribution is formed in the maximum principal stress direction when used as a spring, and fatigue resistance can be improved.

In this Embodiment, a multi-step shotpeening treatment including a first shotpeening treatment by shot having particle diameters of 0.6 to 1.2 mm, a second shotpeening treatment by shot having particle diameters of 0.2 to 0.8 mm, and a third shotpeening treatment by shot having particle diameters of 0.02 to 0.30 mm is performed. Since smaller shot is used in a later shotpeening treatment than in an earlier shotpeening process, surface roughness of the wire material can be even.

As the shot used in the shotpeening, a high hardness particle such as steel cut wire, steel beads and of the FeCrB type can be used. Furthermore, compressive residual stress can be controlled by sphere equivalent diameter, projection rate, projection time of the shot, or projection method in multiple steps.

Furthermore, in this Embodiment, hot setting is performed as the setting treatment, heating is performed to 100 to 300 °C, and plastic strain is imparted to the steel material having a spring shape so that shear strain amount acting at the surface of the wire material is not less than shear strain amount in action stress in a case in which it is used as a practical spring.

The compression coil spring of the present invention produced by abovementioned process (A) has a C-condensed layer which has a concentration above the average concentration of C contained in the steel wire material at the surface layer part, and thickness of the C-condensed layer is within 0.01 to 0.05 mm along the entirety of the circumference of the steel wire material. In such a compression coil spring, since the thin and uniform C-condensed layer is formed at the surface of the steel wire material, not only is residual austenite phase low and sag resistance improved, but fatigue resistance can also be improved by rendering the vicinity of the surface high hardness so as to improve yield stress and by efficiently obtaining effects of shotpeening.

Next, in order to compare with the Embodiment of the present invention, processes (B) and (C) are explained.

In the process (B) of Fig. 1, cold coiling of the steel wire material M used in the process (A) is performed by a coiling apparatus (coiling process). Furthermore, temperature of the steel wire material after coiling is increased to an austenite region under a reduced pressure condition containing hydrocarbon gas so as to perform quenching (oil at about 60 °C for example is used as the quenching liquid) (carburizing + quenching process). Next, in a manner similar to the process (A), tempering process, shotpeening process and setting process are performed, in this order.

In the process (C), annealing and nitriding are performed instead of carburizing, quenching and tempering in the process (B).

Examples

1. Method for production of samples

Samples of coil spring were produced by each production process, and fatigue resistance of the samples were evaluated. First, oil-tempered wires having chemical compositions shown in Table 1 and iron and inevitable impurities as the remainder were prepared. Then, with respect to the oil-tempered wires, according to the production processes A to C shown in Fig. 1, coil springs with closed ends having a wire diameter of 4.1 mm, a spring index of 6, a total number of windings of 5.75, and a number of windings of valid part of 3.25 were produced by a hot forming method or cold forming method. It should be noted that "OT wire" in Table 1 means "oil-tempered wire".

Table 1

| | | | | | | | | | (wt%) |
|------|------|------|------|------|------|------|------|------|---------|
| No. | C | Si | Mn | Cr | V | Ni | Mo | W | Remarks |
| A | 0.65 | 1.30 | 0.60 | 0.50 | 0.08 | - | - | - | OT wire |
| B | 0.56 | 1.99 | 0.80 | 1.01 | 0.09 | 0.21 | - | - | OT wire |
| C | 0.60 | 2.35 | 0.30 | 1.85 | 0.35 | 0.30 | - | - | OT wire |
| D | 0.73 | 2.16 | 0.70 | 1.00 | 0.10 | - | 0.15 | 0.10 | OT wire |

In the production process A, the steel wire was heated, carburized at treatment temperatures shown in Table 2 and coiled by a coiling apparatus having a high-frequency heating coil, covering member and gas supplying part (see Fig. 2), and quenched in an oil at a temperature of 60 °C. In Table 2, the carburizing treatment temperature indicates the temperature of the surface of the steel wire. Subsequently, tempering treatment was performed in conditions shown in Table 2 (Examples 1 to 7, Comparative Examples 1 to 4).

The "coiling + carburizing method" in Table 2 means that the heated steel wire was carburized right before the coiling, "A" is a carburizing method in which the covering member and gas supplying part were used, and "B" is a carburizing method in which hydrocarbon gas was blown from a nozzle to the surface of the steel wire.

In the production process B, a cold coiling was performed by a freely selected coiling apparatus, the coiled steel wire material was heated to an austenite region under conditions of reduced pressure and containing hydrocarbon gas, quenching was performed in an oil at 60 °C, and tempering was performed at 300 °C (Comparative Example 6). In the production process C, a cold coiling was performed, annealing was performed at 430 °C, and nitriding was performed. In the nitriding treatment, a hardened layer having a depth of 0.04 mm was formed on the surface of the steel wire material (Comparative Examples 7 and 8).

Then, shotpeening treatment and setting treatment were performed for each sample. In the shotpeening treatment, a first shotpeening treatment by steel round cut wire having sphere equivalent diameter of 1.0 mm, a second shotpeening treatment by steel round cut wire having sphere equivalent diameter of 0.5 mm, and a third shotpeening treatment by steel beads having sphere equivalent diameter of 0.1 mm were performed, in this order. The setting was hot setting, which was performed at heating temperature of the coil spring at 200 °C, and load stress of 1500 MPa.

Table 2

| Sample | Material | Production process | Coiling + carburizing method | Coiling temperature (°C) | Carburizing treatment temperature (°C) | Tempering temperature (°C) | Annealing temperature (°C) |
|---|---|---|---|---|---|---|---|
| Example 1 | A | A | A | 1100°C | 1100°C | 425°C | - |
| Example 2 | B | A | A | 1100°C | 1100°C | 425°C | - |
| Example 3 | C | A | A | 1100°c | 1100°C | 425°C | - |
| Example 4 | c | A | A | 1100°C | 1100°C | 445°C | - |
| Example 5 | C | A | A | 1000°C | 1000°C | 425°C | - |
| Example 6 | D | A | A | 1100°C | 1100°C | 425°C | - |
| Example 7 | C | A | A | 1100°C | 1100°C | 350°C | - |
| Comparative example 1 | C | A | A | 950°C | 950°C | 425°C | - |
| Comparative Example 2 | C | A | A | 1100°C | 1100°C | 490°C | - |
| Comparative example 3 | C | A | A | 1120°C | 1120°C | 300°C | - |
| Comparative example 4 | C | A | A | 1200°C | 1200°C | 425°C | - |
| Comparative example 5 | C | A | B | 1100°C | 1100°C | 425°C | - |
| Comparative Example 6 | C | B | - | - | 850°C | 300°C | - |
| Comparative example 7 | B | C | - | - | - | - | 430°C |
| Comparative example 8 | C | C | - | - | - | - | 430°C |

2. Method for Evaluation

Properties of these samples produced as mentioned above were examined as follows. The results are shown in Table 3.

(1) Hardness (HV)

Measurement of hardness was performed at a cross section of wire material of the coil spring using a Vickers hardness testing apparatus (trade name: FM-600, produced by Future Tech Corp.). The measured load was 25 gf from the surface to a depth of 0.02 mm ("surface" in Table 3), and 200 gf from the surface to depth of d (wire diameter) / 4 mm ("inside" in Table 3). With respect to each of the depths, the measurement was performed at three freely selected concentric points and the average value thereof was calculated. (2) Value of integral of compressive residual stress ($I_{-\sigma R}$), and Crossing Point (CP)

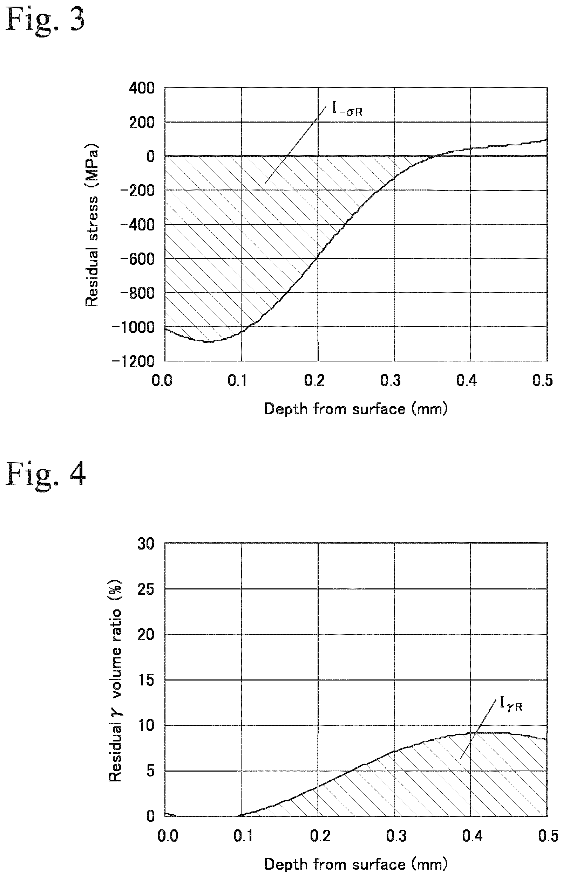

At a surface of the inner diameter side of the coil spring, compressive residual stress in the $+45°$ direction with respect to the wire axis direction of the wire material (an approximate maximum principal stress direction when a compressive load is loaded to a spring) was measured using an X-ray diffraction type residual stress measuring apparatus (produced by Rigaku Corporation). The measurement was performed in conditions of tube: Cr, and collimator diameter: 0.5 mm. Furthermore, chemical polishing was performed on the entire surface of the wire material of the coil spring using hydrochloric acid, and then the measurement was performed. These processes were repeated so as to measure residual stress distribution along the depth direction, and according to the results, crossing point was measured. Furthermore, the value of the integral of the compressive residual stress was calculated by integrating compressive residual stress from the surface to the crossing point, in a diagram showing the relationship of depth and residual stress. It should be noted that residual stress distribution of Example 1 is shown in Fig. 3 as an example.

(3) Surface C concentration ($C_c$), and C-condensed layer thickness ($C_t$)

At the cross section of the wire material of the coil spring, by measuring at six points per every 60 degrees, the average value of the C concentration of the surface, the average value of thickness of the C-condensed layer, the maximum value, and the minimum value were measured. In the measurement, a line analysis was performed in conditions of beam diameter 1 $\mu$m and measuring pitch 1 $\mu$m using EPMA (trade name: EPMA-1600, produced by Shimadzu Corporation). The thickness of the C-condensed layer is defined as a depth from the surface at which the C concentration is the same as that inside of the wire material.

(4) Residual austenite ($I_{\gamma R}$)

At the cross section of the wire material of the coil spring, with respect to each of the measured depths from the outermost surface to 0.5 mm depth, the volume ratio of residual austenite was measured at six points per every 60 degrees, a residual austenite distribution curve having residual austenite volume ratio on the vertical axis and the radius direction of wire on the horizontal axis was obtained, and an integral value $I_{\gamma R}$ from the surface to 0.5 mm depth was calculated in the curve. The measurement was performed by using two-dimensional PSPC installed X-ray diffractometry apparatus (trade name: D8 DISCOVER, produced by Bruker). It should be noted that the residual austenite distribution of Example 1 is shown in Fig. 4 as an example.

(5) Surface roughness (Rz (maximum height))

The surface roughness was measured using a non-contact three-dimensional shape measuring apparatus (trade name: NH-3, produced by MITAKA) according to JIS B0601. Conditions of the measurement were measuring magnification 100 times, measuring distance 4 mm, measuring pitch 0.002 mm, and cut-off value 0.8 mm.

(6) Average crystal grain diameter ($d_{GS}$)

The average crystal grain diameter was measured using JEOL JSM-7000F (OIM-Analysis Ver. 4.6, produced by TSL Solutions) according to SEM/EBSD (electron backscatter diffraction) method. Here, the measurement was performed at the one-quarter depth of the cross section of the coil spring (d/4) and in condition of observing magnification 5000 times, and an interface at which direction angle difference is $5°$ or more was defined as the grain boundary to calculate average crystal grain diameter.

(7) Fatigue resistance (damage ratio)

The fatigue test was performed in air at room temperature using a hydraulic servo type fatigue resistance testing apparatus (produced by Saginomiya Seisakusho, Inc.). The fatigue resistance was evaluated according to damage ratio (number of breaks/number of tests) when vibrated 20 million times in conditions of testing stress 735±686 MPa, frequency 20 Hz, and number of test pieces 7 in each sample in components A and B in Table 1. The fatigue resistance was evaluated according to damage ratio (number of breaks/number of tests) when vibrated 20 million times in conditions of testing stress 760±711 MPa, frequency 20 Hz, and number of test pieces 7 in each sample in component C.

(8) Sag resistance (residual shear strain ratio Δγ)

A hot tightening test of the coil springs was performed. Conditions of the test were testing stress 1100 MPa, test temperature 120 °C, and test time 48 hours. Using the following formula 1, residual shear strain ratio Δγ was calculated from load loss amount after the test compared to before the test.

$$\text{Formula 1}$$

$$\Delta \gamma = 100 \times 8 D \Delta P / \pi d^3 G$$

(d : Wire diameter, D : Coil average diameter, Δ P : Load loss amount after test compared to before test, G : Modules of rigidity

Table 3

| Sample | HV | | I-$_{\sigma R}$ (MPa·mm) | $C_C$ (%) | $C_t$(mm) | | | I$_{\gamma R}$(%·mm) | $d_{GS}$ ($\mu$m) | Rz ($\mu$m) | $\triangle_\gamma$(%) | Damage ratio |
|---|---|---|---|---|---|---|---|---|---|---|---|---|
| | Surface | Inside | | | Average | Max | Min | Max | | | | |
| Example 1 | 660 | 610 | 190 | 0.85 | 0.034 | 0.041 | 0.030 | 2.00 | 1.20 | 11.5 | 0.065 | 0/7 |
| Example 2 | 670 | 615 | 192 | 0.88 | 0.035 | 0.043 | 0.033 | 2.10 | 1.10 | 11.0 | 0.060 | 0/7 |
| Example 3 | 759 | 632 | 224 | 0.86 | 0.035 | 0.042 | 0.031 | 2.34 | 1.01 | 11.3 | 0.058 | 0/7 |
| Example 4 | 680 | 600 | 237 | 1.10 | 0.036 | 0.040 | 0.035 | 0.60 | 1.07 | 10.3 | 0.055 | 1/7 |
| Example 5 | 710 | 668 | 197 | 1.18 | 0.025 | 0.030 | 0.020 | 1.65 | 0.84 | 11.5 | 0.052 | 0/7 |
| Example 6 | 770 | 650 | 240 | 0.89 | 0.036 | 0.043 | 0.031 | 2.20 | 1.00 | 10.2 | 0.050 | 0/7 |
| Example 7 | 740 | 705 | 213 | 0.80 | 0.038 | 0.043 | 0.033 | 3.07 | 104 | 7.3 | 0.052 | 1/7 |
| Comparative example 1 | 685 | 663 | 159 | 0.78 | 0.013 | 0.015 | 0.010 | 0.37 | 0.64 | 7.8 | 0.047 | 4/7 |
| Comparative Example 2 | 562 | 570 | 210 | 1.00 | 0.037 | 0.042 | 0.035 | 0.00 | 0.87 | 17.2 | 0.033 | 7/7 |
| Comparative example 3 | 813 | 717 | 178 | 1.05 | 0038 | 0.045 | 0.035 | 3.36 | 1.13 | 6.8 | 0.054 | 6/7 |
| Comparative example 4 | 760 | 650 | 220 | 1.10 | 0.043 | 0.045 | 0.038 | 3.40 | 1.35 | 11.0 | 0.080 | 6/7 |
| Comparative example 5 | 750 | 640 | 220 | 0.90 | 0.040 | 0.060 | 0.020 | 3.50 | 1.00 | 12.0 | 0.080 | 0/7 |
| Comparative Example 6 | 753 | 698 | 174 | 1.10 | 0.090 | 0.100 | 0.080 | 3.55 | 0.73 | 6.9 | 0.093 | 1/7 |
| Comparative example 7 | 780 | 590 | 143 | - | - | - | - | 0.24 | 0.70 | 4.2 | 0.042 | 4/7 |
| Comparative example 8 | 855 | 624 | 149 | - | - | - | - | 0.00 | 0.62 | 4.5 | 0.033 | 7/7 |

3. Results of evaluation

(1) Hardness

As is obvious from Table 3, high fatigue resistance can be exhibited in the case in which inner hardness is in a range of 600 to 710 HV in Examples 1 to 7 in which the hot forming method of the process (A) was employed in the present invention. On the other hand, from results of Comparative Examples 2 and 3, sufficient fatigue resistance could not be obtained in a case in which hardness was less than 600 HV or not less than 710 HV even if the coil spring was produced by a hot forming method. Furthermore, in Examples 1 to 7, surface hardness was 30 HV or more greater than that of the inside by carburizing. High compression residual stress can be obtained in the vicinity of the surface in this way, and fatigue cracking can be prevented from occurring originating from the vicinity of the surface (including the outermost surface) (improvement of fatigue resistance). On the other hand, increase of surface hardness was less than 30 HV in Comparative Example 1, there was lots of abrasion at the middle wire part in which contact is repeated during action, early breakage occurred from the part, and sufficient fatigue resistance was not obtained.

(2) Residual stress distribution

With respect to Examples 1 to 7, deep and large compressive residual stress, $I_{-\sigma R}$ not less than 180 MPa, being good fatigue resistance, was obtained. On the other hand, in Comparative Examples 7 and 8, shallow and small compressive residual stress, $L_{-\sigma R}$ not more than 150 MPa, being inferior fatigue resistance, was obtained. This reason is considered to be that in Examples 1 to 7, which were produced by the process (A), since there is little tensile residual stress (remaining in inner diameter side of coil) in a hot coiling than is generated in a cold-coiling, compressive residual stress by shotpeening easily enters deeper from the surface compared to cases of Comparative Examples 7 and 8 in which tensile residual stress was generated by cold coiling.

(3) Surface C concentration and thickness of C-condensed layer

In Examples 1 to 7, since surface C concentration was 0.7 to 1.2 % and thickness of C-condensed layer (depth from the surface which is the same C concentration as inside the wire material) was 0.01 mm to 0.05 mm by carburizing and hardness at the vicinity of the surface was also high, high compressive residual stress can be obtained in the vicinity of the surface, surface roughness was improved, and high fatigue resistance could be obtained. On the other hand, in Comparative Example 5, although the average thickness of the C-condensed layer was similar to that in Examples 1 to 7, thickness of the C-condensed layer varied substantially because the carburizing method was different. Therefore, the thickness was over 0.05 mm at a part that had large thickness of the C-condensed layer, and thus, excess carburizing resulted in increase in residual austenite. $I_{\gamma P}$ (integral value of $\gamma R$ from surface to 0.5 mm depth in relational diagram between depth and yR) was not more than 3.1 %-mm in Examples 1 to 7; in contrast, it was 3.5 %-mm, which was large, in Comparative Example 5. As a result, residual shear strain ratio $\Delta\gamma$ was 0.050 to 0.065, which was small, and this indicated good sag resistance in Examples 1 to 7; in contrast, residual shear strain ratio $\Delta\gamma$ was 0.080, which was large, and this indicated inferior sag resistance in Comparative Example 5. Furthermore, C concentration at the surface was 1.1 % and thickness of the C-condensed layer was 0.90 mm in Comparative Example 6, which indicates excess carburizing was performed, residual austenite was increased, and $I_{\gamma R}$ was 3.55 %·mm, which was large. As a result, residual shear strain ratio $\Delta\gamma$ was 0.093, indicating inferior sag resistance compared to Examples 1 to 7.

(5) Surface roughness

With respect to Examples 1 to 7 in which high fatigue resistance was obtained, the surface roughness Rz (maximum height) was not more than 12.0 $\mu$m, which was sufficient to satisfy the desirable surface roughness Rz of not greater than 20 $\mu$m. Here, in a case in which Rz was greater than 20 $\mu$m, a concave portion in the surface roughness may become a stress concentrating source, a break may be generated originating from the concave portion, propagate, and cause early breakage as a result. Furthermore, this surface roughness is formed by friction with tools during coiling or shotpeening treatment. The surface roughness formed by shotpeening is determined by a combination of hardness of the wire material and conditions such as particle diameter, hardness and projection rate of shot. Therefore, the conditions of shotpeening should be appropriately set so that Rz is not more than 20 $\mu$m.

(6) Average crystal grain diameter

In the Examples, average crystal grain diameter ($d_{GS}$) was in a range of 0.84 to 1.30 $\mu$m, having fine crystalline structure. This is because high frequency heating in a short time results in reduced coarseness of structure or results in reduction in size as mentioned above, and as a result, fine average crystal grain diameter was obtained and fatigue resistance was improved in Examples 1 to 7. In contrast, since coiling and carburizing temperature was high in Comparative Example 4 and average crystal grain diameter ($d_{GS}$) was 1.35 $\mu$m, which was large, compared to Examples. Therefore, sag resistance and fatigue resistance were deteriorated.

As mentioned above, according to the compression coil spring of the present invention, fatigue resistance and sag resistance can be greatly improved.

Since the present invention has high fatigue resistance and high sag resistance, it can be used for a valve spring, in particular a valve spring for a race car engine used under high stress conditions or as a clutch torsion spring used in a clutch.

**Claims**

1.   A compression coil spring, comprising a steel wire material containing, hereinafter in weight%, 0.5 to 0.7 % of C, 1.2 to 3.0 % of Si, 0.3 to 1.2 % of Mn, 0.5 to 1.9 % of Cr and 0.05 to 0.5 % of V as necessary components, one or more kinds selected from not more than 1.5 % of Ni, not more than 1.5 % of Mo and not more than 0.5 % of W as optional components, and iron and inevitable impurities as the remainder, wherein a C-condensed layer which exceeds average concentration of C contained in the steel wire material exists at a surface layer part, and thickness of the C-condensed layer is within 0.01 to 0.05 mm along the entire circumference of the steel wire material.

2.   The compression coil spring according to claim 1, wherein internal hardness at a freely selected cross section of the steel wire material is in a range of 600 to 710 HV, and maximum hardness of the C-condensed layer is not less than 30 HV greater than the internal hardness.

3.   The compression coil spring according to either of claims 1 and 2, wherein average crystal grain diameter, an interface of direction angle difference of not less than 5° defined as a grain interface, measured by the SEM/EBSD method, is not greater than 1.3 $\mu$m.

4.   The compression coil spring according to any one of claims 1 to 3, wherein in a maximum principal stress direction of an inner diameter side of the coil spring generated when a compressive load is loaded on the coil spring, when defining a depth from a surface of the wire material at which value of unloaded compressive residual stress is zero as a crossing point, and when defining a value of an integral from a surface to the crossing point in a residual stress distribution curve having residual stress on the vertical axis and depth from the surface on the horizontal axis as $I_{-\sigma R}$, the $L_{-\sigma R}$ is not less than 150 MPa·mm.

5.   The compression coil spring according to any one of claims 1 to 4, wherein with respect to residual austenite volume ratio yR measured by X-ray diffractometry, when defining a value of an integral from a surface to a depth of 0.5 mm in a residual austenite distribution curve having residual austenite volume ratio on the vertical axis and the depth from the surface on the horizontal axis as $I_{\gamma R}$, the $I_{\gamma R}$ is not more than 3.4 %·mm.

6.   The compression coil spring according to any one of claims 1 to 5, wherein surface roughness Rz (maximum height) is not more than 20 $\mu$m.

7.   A method for production of a compression coil spring, comprising:

a coiling process in which steel wire material is hot-formed by a coil spring forming apparatus, a quenching process in which a coil which is coiled and cut off and is still at an austenite temperature range is quenched as it is, a tempering process in which the quenched coil is thermally refined, and a shotpeening process in which compressive residual stress is imparted to a wire material surface, wherein heating, carburizing and hot-forming are performed in the coiling process and the coil spring forming apparatus comprises a feed roller continuously supplying the steel wire material, a coiling part coiling the steel wire material in a coil shape, and a cutting means for cutting the steel wire material which is continuously supplied from upstream after the steel wire material is coiled at a predetermined number of windings, the coiling part comprises a wire guide for introducing the steel wire material supplied by the feed roller to an appropriate position in a processing part, a coiling tool including a coiling pin or coiling roller for processing the steel wire material supplied via the wire guide into a coil shape, and a pitch tool for imparting pitch,

the coil spring forming apparatus further comprises a heating means in which the steel wire material is heated to an austenite temperature region between an outlet of the feed roller and the coiling tool, a covering member covering outer circumference of the steel wire material is arranged along a part of or along the entirety of the region between steel wire material inlet side in the heating means and the coiling tool, and a gas supplying means supplying hydrocarbon gas in the covering member is arranged.

8. The method for production of a compression coil spring according to claim 7, wherein the heating means is a high-frequency heating apparatus, and a high-frequency heating coil is arranged so as to be coaxial with the steel wire material on a route passing the steel wire material in the wire guide, or on a route of passing the steel wire material in a space between an end of a steel wire material outlet side of the wire guide and the coiling tool.

# Fig. 1

| Process (A) | coiling+carburizing (hot) | quenching | tempering | | SP | setting |

Process (A) — coiling+carburizing (hot) — quenching — tempering — SP — setting

Process (B) — coiling (cold) — carburizing +quenching — tempering — SP — setting

Process (C) — coiling (cold) — annealing — nitriding — SP — setting

# Fig. 2

Fig. 3

Fig. 4

## INTERNATIONAL SEARCH REPORT

| International application No. |
|---|
| PCT/JP2018/015034 |

A. CLASSIFICATION OF SUBJECT MATTER
Int.Cl.    C22C38/00(2006.01)i,    C21D1/06(2006.01)i,    C21D7/06(2006.01)i,
C21D9/02(2006.01)i,    C22C38/46(2006.01)i,    F16F1/06(2006.01)i,
C22C38/54(2006.01)n

According to International Patent Classification (IPC) or to both national classification and IPC

B. FIELDS SEARCHED

Minimum documentation searched (classification system followed by classification symbols)
Int.Cl. C22C1/00-49/14, C21D1/06, C21D7/06, C21D9/02, F16F1/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2014-206219 A (NHK SPRING CO., LTD.) 30 October 2014, claims, sign E of table 1, invention example 5 of table 2, paragraphs [0061]-[0066], invention example 5 of table 3 (Family: none) | 1, 3-4, 6<br>5, 7-8,<br>2 |
| X<br>Y<br>A | WO 2014/042066 A1 (NHK SPRING CO., LTD.) 20 March 2014, claims, sign E of table 1, invention example 27 of table 2, paragraphs [0078]-[0083], invention example 27 of table 3 & US 2015/0252863 A1 & EP 2896712 A1 & CN 104619878 A & KR 10-2015-0054969 A | 1, 3-4, 6<br>5, 7-8<br>2 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 July 2018 (05.07.2018) | 17 July 2018 (17.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/015034 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2009-052144 A (TOGO SEISAKUSYO CORPORATION) 12 March 2009, paragraphs [0025]-[0030] (Family: none) | 5 |
| Y | JP 10-305342 A (AISIN SEIKI CO., LTD.) 17 November 1998, paragraphs [0017]-[0018], fig. 1 (Family: none) | 7-8 |
| A | JP 2004-323912 A (CHUO SPRING CO., LTD.) 18 November 2004 (Family: none) | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3595901 B
- JP 2014055343 A
- JP 2009226523 A